(19)

Europäisches Patentamt

European Patent Office

Office européen des brevets

(11) **EP 4 575 883 A1**

(12) **EUROPEAN PATENT APPLICATION**

(43) Date of publication:
**25.06.2025 Bulletin 2025/26**

(21) Application number: **24214888.0**

(22) Date of filing: **22.11.2024**

(51) International Patent Classification (IPC):
**G06F 40/284** (2020.01)   **G06F 16/35** (2025.01)
**G06F 40/289** (2020.01)   **G06F 40/30** (2020.01)
**G06N 20/00** (2019.01)

(52) Cooperative Patent Classification (CPC):
**G06F 40/30; G06F 16/35; G06F 40/284;**
**G06F 40/289; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.12.2023 IN 202321086642**

(71) Applicant: **Tata Consultancy Services Limited Maharashtra (IN)**

(72) Inventors:
• **PAWAR, SACHIN SHARAD**
  **411057 Pune - Maharashtra (IN)**

• **RAMRAKHIYANI, NITIN VIJAYKUMAR**
  **382009 Gandhinagar, Gujarat (IN)**
• **SINHA, ANUBHAV**
  **560066 Bengaluru - Karnataka (IN)**
• **APTE, MANOJ MADHAV**
  **411057 Pune - Maharashtra (IN)**
• **PALSHIKAR, GIRISH KESHAV**
  **411057 Pune - Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **PERPLEXITY AND LOG-LIKELIHOOD BASED APPROACH FOR TEXT CLASSIFICATION USING CAUSAL LANGUAGE MODELS**

(57)    State of art techniques using moderate sized Language Models (LMs) for text classification need fine-tuning or in-context learning. A method and system providing a two-step classification using moderate-sized (#params ≤ 2.7B) causal LM (Gen AI) is disclosed. Firstly, for a text instance to be classified, a set of perplexity and log-likelihood based features are obtained from an LM. Further, a light-weight classifier is trained in the second step to predict the final label. The system enables a new way of exploiting the available labelled instances, in addition to the existing ways like fine-tuning LMs or in-context learning. It neither needs any parameter updates in LMs like fine-tuning nor it is restricted by the number of training examples to be provided in the prompt like in-context learning. The key advantages of the disclosed system are explainability through most suitable key phrases and its applicability in resource poor environment.

FIG. 1B

EP 4 575 883 A1

**Description**

CROSS-REFERENCE TO RELATED APPLICATIONS AND PRIORITY

The present application claims priority to Indian application no. Indian Patent Application No. 202321086642, filed on December 18, 2023

TECHNICAL FIELD

The embodiments herein generally relate to the field of Natural Language Processing and, more particularly, to a method and system for perplexity and log-likelihood based approach for text classification using causal Language Models (LMs).

BACKGROUND

In recent years, the autoregressive or causal Language models (LM) like Generative pre-trained transformers (GPT)-3 and GPT-Neo have been successful in a variety of natural language processing tasks such as summarization, machine translation, question answering, etc. Recently, there have been attempts to use such LMs for text classification in zero-shot or few-shot manner. In these approaches, there are several challenges for using moderate-sized LMs like GPT-Neo-2.7B for text classification in both zero-shot as well as few-shot settings. In a zero-shot setting, getting the LM to generate an output containing the expected class labels is challenging. E.g., in case of SST-2 dataset for sentiment prediction, in spite of providing specific instruction in the prompt, for only around 10% test instances, the generated text contained the expected Positive and Negative labels. Most cases resulted in generating some random text or generating some text containing words like mess or brilliant from which the actual labels need to be inferred in a non-trivial way as can be seen in Table 1.

Table 1

| |
|---|
| PROMPT: This is an overall sentiment classifier for movie reviews. Classify the overall SENTIMENT of the INPUT as Positive or Negative. |
| INPUT: If this movie were a book, it would be a page turner, you can't wait to see what happens next. |
| SENTIMENT: *This movie is a mess (generated text)* |
| PROMPT: This is an overall sentiment classifier for movie reviews. A review with Positive SENTIMENT finds the movie to be great, good, encouraging, brilliant, excellent, accurate, realistic, engaging, funny, or exciting. A review with Negative SENTIMENT finds the movie to be terrible, bad, unrealistic, frustrating, boring, forgettable, predictable, thoughtless, appalling, or incomprehensible. Classify the overall SENTIMENT of the INPUT as Positive or Negative. |
| INPUT: Together, Tok and O orchestrate a buoyant, darkly funny dance of death. |
| SENTIMENT: *Tok and O are a couple of misfits who... (generated text)* |

In a few-shot setting, the generated output conforms to the expected format in most cases. However, due to the limited context window of the LM, a large number of training instances cannot be provided in the prompt. This limits the ability of the LM to exploit the available labelled examples. Another way of exploiting training examples is through fine-tuning the LM. However, this requires specialized hardware resources (like GPUs with significant RAM) and time for fine-tuning.

Very large LMs like GPT-3 may not face these above challenges, but their usage through Application Programming Interfaces (APIs) entails sharing the data to be classified and this may not be desirable for private and confidential data.

Moderate-sized LMs such as GPT-Neo-2.7B can be deployed with very limited hardware in-house. Thus they can be useful resources for text classification requirements of organizations, where data privacy is critical. However, achieving text classification with desired accuracy using moderate sized LMs still remain an unaddressed technical challenge considering the technical limitations of such LMs as mentioned above.

SUMMARY

Embodiments of the present disclosure present technological improvements as solutions to one or more of the above-mentioned technical problems recognized by the inventors in conventional systems.

For example, in one embodiment, a method for text classification is provided. The method includes receiving a text, predefined numbers of class labels, a set of key phrases associated with each of the predefined class labels, and a connector sentence, wherein the text is to be classified into one or more class labels from among predefined class labels.

Further, the method includes generating a plurality of label-specific augmentations for the text based on each key phrase among the set of key phrases associated with each of the predefined class labels, and the connector sentence.

Further, the method includes deriving via a Language Model (LM) executed by one or more hardware processors, perplexity based key phrase level features and log-likelihood based key phrase level features for each of the plurality of label-specific augmentations. Each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase. Each of the log-likelihood based key phrase level features captures an increase in log-likelihood of the key phrase from the set of key phrases, wherein the increase in log-likelihood is a difference between conditional log-likelihood of the key phrase given the text to be classified, and log-likelihood of the key phrase.

Furthermore, the method includes determining, i) a class level perplexity based feature for each of the predefined class labels as a minimum of perplexity based key phrase level features associated with the corresponding class label, and ii) a class level log-likelihood based feature for each of the predefined class labels as maximum of log-likelihood based key phrase level features associated with the corresponding class label.

Further, the method includes predicting for a zero shot classification, the one or more class labels for the text based on one of : i) value of perplexity based class level features lying below a minimum threshold value; and ii) value of log-likelihood based class level features lying above a maximum threshold value.

Furthermore, the method includes enhancing an accuracy of prediction of text classification of the text into one or more class labels using a pretrained supervised machine learning classifier that utilizes the perplexity based key phrase level features, log-likelihood based key phrase level features, the class level perplexity based features, and the class level log-likelihood based features. The supervised machine learning classifier is trained on the perplexity based key phrase level features, log-likelihood based key phrase level features, the class level perplexity based features, and the class level log-likelihood based features obtained for a training data.

In another aspect, a system for text classification is provided. The system comprises a memory storing instructions; one or more Input/Output (I/O) interfaces; and one or more hardware processors coupled to the memory via the one or more I/O interfaces, wherein the one or more hardware processors are configured by the instructions to receive a text, predefined numbers of class labels, a set of key phrases associated with each of the predefined class labels, and a connector sentence, wherein the text is to be classified into one or more class labels from among predefined class labels.

Further, the system is configured to generate a plurality of label-specific augmentations for the text based on each key phrase among the set of key phrases associated with each of the predefined class labels, and the connector sentence.

Further, the system is configured to derive via a Language Model (LM) executed by the one or more hardware processors, perplexity based key phrase level features and log-likelihood based key phrase level features for each of the plurality of label-specific augmentations. Each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase. Each of the log-likelihood based key phrase level features captures an increase in log-likelihood of the key phrase from the set of key phrases, wherein the increase in log-likelihood is a difference between conditional log-likelihood of the key phrase given the text to be classified, and log-likelihood of the key phrase.

Furthermore, the system is configured to determine, i) a class level perplexity based feature for each of the predefined class labels as a minimum of perplexity based key phrase level features associated with the corresponding class label, and ii) a class level log-likelihood based feature for each of the predefined class labels as maximum of log-likelihood based key phrase level features associated with the corresponding class label.

Further, the system is configured to predict for a zero shot classification, the one or more class labels for the text based on one of : i) value of perplexity based class level features lying below a minimum threshold value; and ii) value of log-likelihood based class level features lying above a maximum threshold value.

Furthermore, the system is configured to enhance an accuracy of prediction of text classification of the text into one or more class labels using a pretrained supervised machine learning classifier that utilizes the perplexity based key phrase level features, log-likelihood based key phrase level features, the class level perplexity based features, and the class level log-likelihood based features. The supervised machine learning classifier is trained on the perplexity based key phrase level features, log-likelihood based key phrase level features, the class level perplexity based features, and the class level log-likelihood based features obtained for a training data.

In yet another aspect, there are provided one or more non-transitory machine-readable information storage mediums comprising one or more instructions, which when executed by one or more hardware processors causes a method for text classification. The method includes receiving a text, predefined numbers of class labels, a set of key phrases associated with each of the predefined class labels, and a connector sentence, wherein the text is to be classified into one or more class labels from among predefined class labels.

Further, the method includes generating a plurality of label-specific augmentations for the text based on each key phrase among the set of key phrases associated with each of the predefined class labels, and the connector sentence.

Further, the method includes deriving via a Language Model (LM) executed by the one or more hardware processors, perplexity based key phrase level features and log-likelihood based key phrase level features for each of the plurality of label-specific augmentations. Each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase. Each of the log-likelihood based key phrase level features captures an increase in log-likelihood of the key phrase from the set of key phrases, wherein the increase in log-likelihood is a difference between conditional log-likelihood of the key phrase given the text to be classified, and log-likelihood of the key phrase.

Furthermore, the method includes determining, i) a class level perplexity based feature for each of the predefined class labels as a minimum of perplexity based key phrase level features associated with the corresponding class label, and ii) a class level log-likelihood based feature for each of the predefined class labels as maximum of log-likelihood based key phrase level features associated with the corresponding class label.

Further, the method includes predicting for a zero shot classification, the one or more class labels for the text based on one of : i) value of perplexity based class level features lying below a minimum threshold value; and ii) value of log-likelihood based class level features lying above a maximum threshold value.

Furthermore, the method includes enhancing an accuracy of prediction of text classification of the text into one or more class labels using a pretrained supervised machine learning classifier that utilizes the perplexity based key phrase level features, log-likelihood based key phrase level features, the class level perplexity based features, and the class level log-likelihood based features. The supervised machine learning classifier is trained on the perplexity based key phrase level features, log-likelihood based key phrase level features, the class level perplexity based features, and the class level log-likelihood based features obtained for a training data.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system, for perplexity and log-likelihood based approach for text classification using causal Language Models (LMs), in accordance with some embodiments of the present disclosure. FIG. 1B illustrates an architectural overview of the system of FIG. 1A, in accordance with some embodiments of the present disclosure.

FIGS. 2A through 2B (collectively referred as FIG. 2) is a flow diagram illustrating a method for perplexity and log-likelihood based approach for text classification using the causal LMs, using the system depicted in FIG. 1A and 1B, in accordance with some embodiments of the present disclosure.

FIGS. 3 through 5 are graphical illustrations for comparative analysis of the system of FIG. 1 with respect to state of the art (SoA) approaches for text classification, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

While Language Models (LMs) enhance performance across various Natural Language Processing (NLP) tasks, prior research has revealed several challenges when applying them to text classification, such as designing appropriate prompts in zero-shot setting, limited input prompt length when using in-context learning, and costly as well as time consuming fine-tuning. Given these constraints, there is a line of research which explores ways using moderate-sized LMs for text classification. One of the recent prominent work in this area is by Min et al. (2022). They introduce "noisy channel" as well as "direct" methods which compute conditional probability of the input text given the label or vice versa, for few-shot text classification through in-context learning and prompt tuning.

Another work by Estienne (2023) wherein the authors propose to calibrate output probabilities of a LM through prior adaptation to perform text classification tasks. They propose two variations of their approach - unsupervised (UCPA) where no labelled data is needed and semi-unsupervised (SUCPA) where some training examples (600) are used for prior adaptation. Both Min et al. (2022) and Estienne (2023) are considered as Baseline approaches for performance of the method and system disclosed herein as they use moderate-sized LMs such as Generative pre-trained transformers (GPT2-XL).

A method and system disclosed herein, partially is based on similar approach of Min et.al. (2022) of computing conditional perplexity but there are several key differences such as (i) computing multiple features (perplexity (PPL) and (log-likelihood (LL)) using domain knowledge based key phrases, (ii) no limitation on number of training examples, and (iii) learning ML classifier based on these features.

Further, the technical limitations of moderate sized causal/autoregressive Language Models (LMs) mentioned in the background section are addressed by embodiments of the present disclosure. The central idea relied on is that generating new text using LMs is not absolutely essential for text classification as it is in case of other tasks such as summarization or machine translation, because the final goal is simply to discriminate among a finite set of class labels.

Embodiments of the method and system disclosed herein provides perplexity and log-likelihood based approach for text classification using causal or autoregressive Language Models (LMs). The method discloses a two-step technique for text classification. In the first step, for any text X to be classified, a set of feature values are elicited from the LM based on perplexity and log-likelihood of certain label-specific augmentations of X. These augmentations are of the form "X. *This text is about ⟨key phrase⟩*." where only a set of key phrases associated with each class label is required. In a zero shot setting, only this first step is required, and a class label is predicted by a simple relative comparison of these feature values. In a supervised setting where labelled training instances are available, the second step is needed to train a light-weight supervised machine learning (ML) classifier using the feature values obtained for the training instances. The trained classifier can then be used to predict the class label for any new instance to be classified.

Even though LMs mostly discussed herein are moderate sized (#parameters $\leq$ 2.7B) and open-source autoregressive language models for text classification, it can be understood that the method is equally applicable for Large LMs (LLMs). The system and method disclosed herein attempts to improve the accuracy of the moderate-sized LMs by using our technique with respect to standard zero-shot/few-shot prompting techniques using these LMs.

Mentioned below is the well-known concept of Perplexity and the way it has been used by the method disclosed herein. Also explained is the Log-likelihood function and the manner in which both perplexity and log-likelihood is used for text classification using causal LMs.

**Perplexity:** This is used in the art as a metric to evaluate language models. Intuitively, a better model of a text is the one which assigns a higher probability to a word that actually occurs. However, in the method disclosed herein, the perplexity is used for a different purpose; judging plausibility of a text fragment using an autoregressive or causal LM and comparing multiple such text fragments to decide which one is the most plausible. Here, by plausibility of a text, means it is seemingly more reasonable or probable.

Consider a text fragment X = $[w_1, w_2, \cdots, w_n]$, which consists of n tokens. The perplexity of X as computed by an LM (M) is as follows:

$$PPL_M(\text{X}) = \prod_{i=1}^{n} \sqrt[n]{\frac{1}{P_M(\omega_i|\omega_{<i})}} \quad (1)$$

The conditional perplexity of a text fragment X given another text C = $[c_1, c_2, \cdots, c_m]$ as its prefix, can be computed as:

$$PPL_M(\text{X}|\text{C}) = \prod_{i=1}^{n} \sqrt[n]{\frac{1}{P_M(w_1|c_1, c_{2,\ldots} c_m, w_{<i})}} \quad (2)$$

Similarly, log-likelihood and conditional log-likelihood for any text *X* are computed as follows:

$$LL_M(X) = \sum_{i=1}^{n} log\left(P_M(w_i|w_{<i})\right) \qquad (3)$$

$$LL_M(X|C) = \sum_{i=1}^{n} log\left(P_M(w_i|c_1, ... c_m, w_{<i})\right) \qquad (4)$$

Overall, the lower the perplexity of $X$ (or higher the log-likelihood of $X$), better is its plausibility.

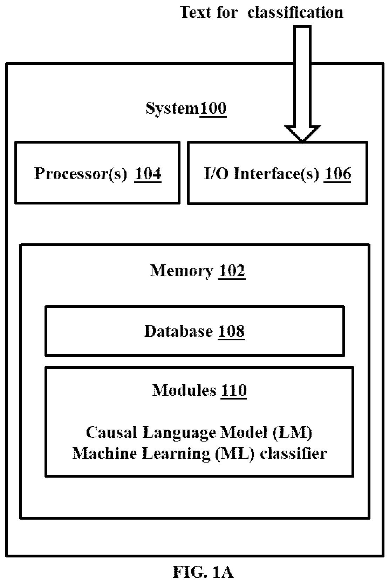

Referring now to the drawings, and more particularly to FIGS. 1A through 5, where similar reference characters denote corresponding features consistently throughout the figures, there are shown preferred embodiments, and these embodiments are described in the context of the following exemplary system and/or method.

FIG. 1A is a functional block diagram of a system 100, for perplexity and log-likelihood based approach for text classification using causal Language Models (LMs), in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as the causal LM, also referred to as autoregressive LM or LM., the Machine Learning (ML) classifier and the like. Further, the memory can include the set of class labels and the set of key phrases associated with each class label. The plurality of modules 110 include programs or coded instructions that supplement applications or functions performed by the system 100 for executing different steps involved in the process of text classification, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110. The received data can include the text that is received for classification, predefined class labels identified for text classification, a set of key phrases per class label and the like. The results include generated prompts comprising a plurality of label-specific augmentations for the text. The class label predicted for the received text and the like.

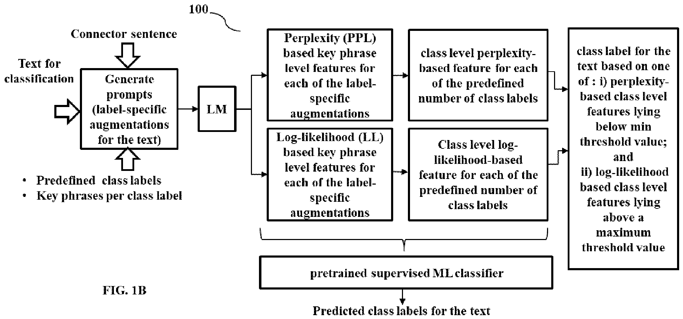

Although the data base 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 1B through FIG. 5.

FIG. 1B illustrates an architectural overview of the system of FIG. 1A, in accordance with some embodiments of the present disclosure. As depicted, a text to be classified, say (X), is received by the system 100 and a plurality of prompts (label-specific augmentations for the text) are generated. These prompts are processed by the LM to generate numeric features based on the perplexity (PPL) and log-likelihood (LL). The text classification using the LM as first step and the pretrained supervised ML classifier as second step are explained below.

**The text classification approach disclosed herein:**
The task of text classification is to assign one or more applicable class labels from a pre-defined set of labels L to a piece of text X. There have been several attempts to use autoregressive LMs for text classification where a response is generated from an LM by providing the text to be classified as part of a prompt. The method and system 100 herein hypothesizes that there is no need to generate new text using an LM for text classification as it is only needed to discriminate among a finite set of class labels. Hence, rather than asking an LM to generate some new text, it is enough to simply compare plausibility of a set of text fragments (label-specific augmentations as shown in Table 2), where each augmentation corresponds to a specific class label. In each label-specific augmentation, the text to be classified (X) is unbold font, the connector sentence (S) is shown in italics and the key phrases are shown in bold font. The $f_{ij}^{PPL}$ and $f_{ij}^{LL}$ feature values are computed using the Generative pre-trained transformers (GPT2-XL™) model. It can be understood that a different appropriate connector sentence is used for different datasets. Further, for any dataset any other connector sentence can also be used. But it should be fixed for all key phrases.

Table 2

| Text to be classified, $X$ =Expansion slows in Japan. Economic growth in Japan slows down as the country experiences a drop in domestic and corporate spending. | Class labels with corresponding key phrases: **Sports**: sports, a sporting event, a sportsperson, ... **Business**: business, economy, stock market, ... **Science:** science, space exploration, software, ... | | |
|---|---|---|---|
| Label-specific augmentations of the above sentence | | $f_{ij}^{PPL}$ | $f_{ij}^{LL}$ |
| $A_{11}$: Expansion slows in Japan. Economic growth in Japan slows down as the country experiences a drop in domestic and corporate spending. *This news is about* **sports**. | | 3.48 | -2.50 |
| $A_{12}$: Expansion slows in Japan. Economic growth in Japan slows down as the country experiences a drop in domestic and corporate spending. *This news is about* **a sporting event**. | | 1.42 | -1.42 |
| $A_{21}$: Expansion slows in Japan. Economic growth in Japan slows down as the country experiences a drop in domestic and corporate spending. *This news is about* **business**. | | 1.22 | -0.40 |

| | | |
|---|---|---|
| $A_{22}$: Economic growth in Japan slows down as the country experiences a drop in domestic and corporate spending. *This news is about* **economy**. | 0.62 | 0.95 |
| $A_{31}$: Expansion slows in Japan. Economic growth in Japan slows down as the country experiences a drop in domestic and corporate spending. *This news is about* **science**. | 7.12 | -3.92 |
| $A_{32}$: Expansion slows in Japan. Economic growth in Japan slows down as the country experiences a drop in domestic and corporate spending. *This news is about* **space exploration**. | 1.52 | -1.27 |

For the example sentence in Table 2, it can be clearly seen that out of all the label-specific augmentations, the texts $A_{21}$ and $A_{22}$ look comparatively more plausible and hence the corresponding class label Business is the most appropriate. Here, it is expected expect that each class label is described by a set of key phrases based on the domain knowledge (examples in Table 2). There is no restriction on the number of key phrases to be used for each class, except that each class must have at least one key phrase which describes it. In absence of any domain knowledge, the class label itself can be used as one of the key phrases.

Explained now through mathematical model is how does the system 100 quantify the plausibility of these text fragments through multiple features in the PPL and LL based first step for identifying class label for the text, and then learn a suitable function which maps these feature values to the appropriate class label using the ML classifier using supervised learning.

**Problem Setting:** Input: (i) $L = \{L_1, \cdots, L_C\}$ (a set of $C$ class labels), (ii) $\{P_i = p^i_1, p^i_2, \ldots p^i_{ni}\}$ (a set of $n_i$ key phrases for each class label $L_i \in L$), (iii) $X = [w_1, w_2, \cdots, w_n]$ (text with $n$ tokens to be classified), and (iv) $M$ (an autoregressive LM)

**Output:** One or more class labels ($\subset L$) which are assigned to $X$

**Training Regime:** A small set of training instances where each instance is of the form $\langle X_t, L_t \rangle$ where $L_t$ is a set of gold-standard labels for $X_t$ such that $L_t \subset L$. Here at most 500 training instances across all the datasets are considered.

**First step (PPL and LL based features):** In this step, for each instance $X$ (either text $X$ to be classified or a training instance $X_t$), a set of feature values corresponding to each key phrase and class label are obtained from the LM $M$. For each class label $L_i$, for its each key *phrase $p^i_j$*, the following two feature values are obtained.

**Perplexity based key phrase level features:**

$$f^{PPL}_{ij}(X) = \frac{PPL_M\left(p^i_j | X + S\right)}{PPL_M\left(p^i_j | S\right)} \tag{5}$$

**Log-likelihood based key phrase level features:**

$$f^{LL}_{ij}(X) = LL_M\left(p^i_j | X + S\right) - LL_M\left(p^i_j | S\right) \tag{6}$$

Here, the first feature capture reduction in perplexity of the key phrase $p^i_j$ and the second feature captures increase in its log-likelihood, when X is provided as part of its prefix.

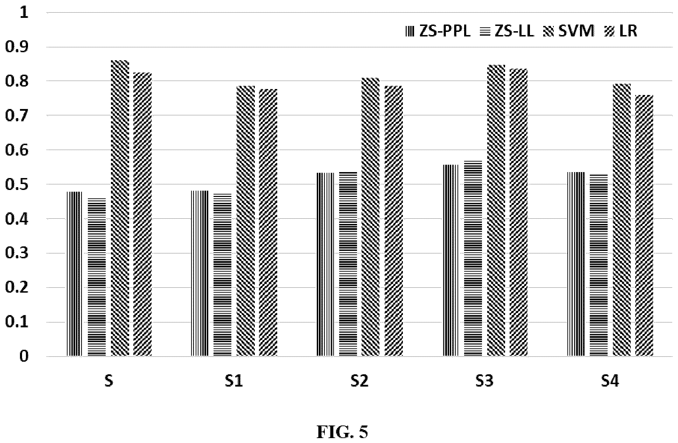

To ensure a proper English sentence formation which links the key phrase to its prefix X, a connector sentence S of the form This news is about1. So, X +S forms the prefix context of a key phrase as shown in Table 2 above. The intuition is that if the key phrase $p^i_j$ is semantically related to the text X, the conditional perplexity $PPL_M(p^i_j | X + S)$ when conditioned on X + S should be lower than $PPL_M(p^i_j|S)$, which is only conditioned on S. Hence, the lower the $f_{ij}^{PPL}(X)$ value, higher the chance that the text is really about $p^i_j$. Similarly, the higher the $f_{ij}^{LL}(X)$ value, higher the chance that the text is about $p^i_j$. For the example sentence in Table 2, these feature values are shown for various key phrases. Also, the choice of a connector sentence does not have much effect on the final predictions because - (i) S is common across all the key phrases for a given dataset and (ii) S is conditioned upon in both the terms $PPL_M(p^i_j|X+S)$ and $PPL_M(p^i_j|S)$ (also $LL_M(p^i_j|X+S)$ and $LL_M(p^i_j|S)$) and hence the effect of any specific S is cancelled. This is empirically observed in the experimental results depicted in FIG. 5. The only purpose of S is to construct a well-formed and suitable English sentence which connects the key phrase with X as its prefix. In addition to the above *keyphrase-level* features, for each class label $L_i$, two *class-level* features are added as follows:

$$f_i^{PPL}(X) = min_j \ (f_{ij}^{PPL}(X)) \qquad (7)$$

$$f_i^{LL}(X) = max_j \ (f_{ij}^{LL}(X)) \qquad (8)$$

Intuitively, for each class, the best feature values across all its key phrases are stored as separate class-level features. Hence, overall for each instance, the number of features is equal to 2.

**Class level perplexity based feature:**

$$ZS - PPL(X) = argmin_i \ (f_i^{PPL}(X)) \qquad (9)$$

**Class level log-likelihood based feature:**

$$ZS - LL(X) = argmax_i \ (f_i^{LL}(X)) \qquad (10)$$

**Zero-shot classification (ZS-PPL/ZS-LL):** The above feature values computed for any text X are themselves enough to predict a class label in zero-shot manner. Here, the predicted class label is the one whose key phrase led to the minimum perplexity ratio or the maximum log-likelihood increase.

Although there is inter-dependence between perplexity and log-likelihood, both PPL and LL features are necessary. A detailed discussion is presented below:

As known, perplexity and log-likelihood are related as $PPL_{M(p)} = \exp\left(\frac{-1}{n} LL_{M(p)}\right)$, where n is the number of tokens (word pieces) within p. This would imply that when the key phrases consist of exactly the same number of to kens (n), then exactly the same ordering of the feature values for both PPL and LL based features is obtained. This would in-turn lead to the same predictions by both Zero Shot (ZS)-PPL and ZS-LL. But in practice, the key phrases may contain different number of tokens, leading to different relative ordering of PPL and LL based features. When an example was studies, it was observed the first key phrase (having 2 tokens) has a better LL than the second key phrase (having 3 tokens) but vice versa in case of PPL. Hence, exploring both PPL and LL based features is important.

**Second Step (supervised ML classifier):** Learning a classifier. This step is needed only in the case of supervised setting where labelled training instances are available. In the above zero-shot classification rule ($ZS^{PPL}/ZS^{LL}$), a very simple function which maps the feature values to a class label is used, i.e., simply considering *minimum* or *maximum* over certain feature values. On the other hand, if training instances are available, a much more complex function which maps these feature values to a class label can be learned. Hence, in this step, the system 100 simply learns a supervised machine learning classifier using the feature values obtained for the training instances. This ML classifier can then be used to predict class labels for new unseen instances. Multiple light-weight classifiers are explored, and it is observed logistic regression (LR) and support vector machines (SVM) to be the best performing in both multi-class and multi-label (one-vs-all) settings.

**Horizontal Scaling:** The feature values are scaled for each instance such that minimum feature value is set to 0 and the maximum is set to 1. Such a scaling is performed separately for perplexity based features and log-likelihood based features. It can be noted that this is different from the usual min-max scaling where a fixed feature is scaled across multiple instances, whereas herein scaling of multiple features for a fixed instance is performed. Intuitively, the feature values are such that the relative values of these features compared to each other is important for determining the final class label.

**Discussion on explainability:** The predictions of the system 100 technique are explainable by design. For each predicted label, an explanation is generated in the form of a ranked list of key phrases (sorted using $f_{ij}^{PPL}$ or $f_{ij}^{LL}$ ) associated with the predicted class (examples in Appendix Table 3).

**Table 3**

| Text | Label | Key phrase | $f_{ij}^{PPL}$ |
|------|-------|-----------|-----------------|
| Afghan Army Dispatched to Calm Violence. KABUL, Afghanistan Government troops intervened in Afghanistan's latest outbreak of deadly fighting between warlords, flying from the capital to the far west on U.S. and NATO airplanes to retake an air base contested in the violence, officials said Sunday... | World | terrori sm | 0.259 |
| Late rally sees Wall Street end week on a positive note. US BLUE-chips recovered from an early fall to end higher as a drop in oil prices offset a profit warning from aluminium maker Alcoa, while a rise in Oracle fuelled a rally in technology stocks after a judge rejected a government attempt to block a... | Business | stock market | 0.087 |
| Bekele, Isinbayeva top track athletes. Names Ethiopian distance runner Kenenisa Bekele and Russian pole vaulter Yelena Isinbayeva were named male and female athletes of the year by the world track and field federation. Isinbayeva set eight world records in 2004, including one while winning the gold medal at the Olympics. Bekele won the 10,000 meters in Athens and finished second to Hicham El Guerrouj in ... | Sports | sporting awards | 0.072 |
| Plans for new Beagle trip to Mars. The team behind Beagle 2, the failed mission to land on Mars and search for life, have unveiled plans for a successor. Professor Colin Pillinger, lead... | Science | space exploration | 0.183 |

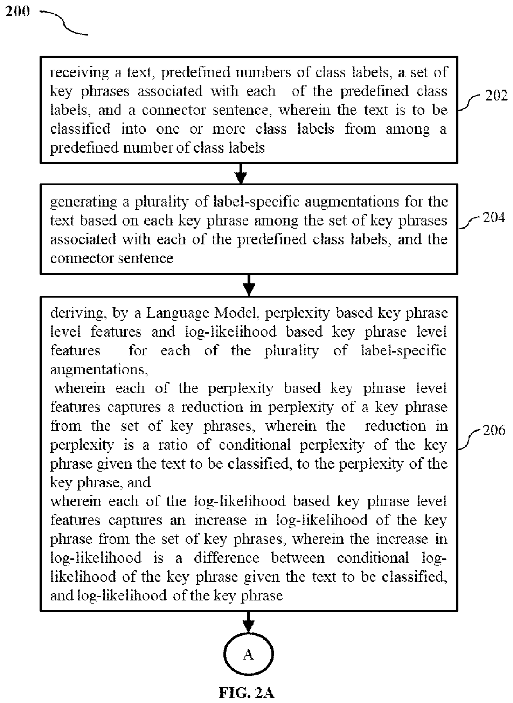

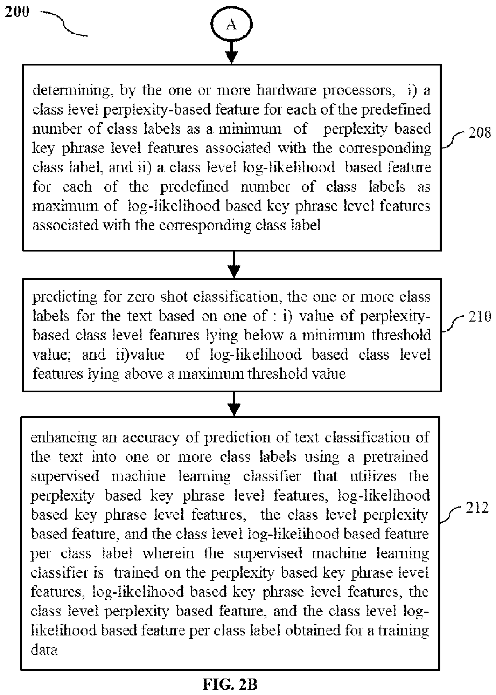

FIGS. 2A through 2B (collectively referred as FIG. 2) is a flow diagram illustrating a method 200 for perplexity and log-likelihood based approach for text classification using the causal LMs, using the system 100 depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the instructions to receive a text (X), predefined numbers of class labels as (L), a set of key phrases (P) associated with each of the predefined class labels, and a connector sentence (S) as mathematically expressed and explained in conjunction with FIG. 1B and Table 2. The text is to be classified into one or more class labels from among predefined class labels.

Once $X, L, P$ are received, at step 204 of the method 200, the one or more hardware processors 104 are configured by the instructions to generate a plurality of prompts, also referred to as a plurality of label-specific augmentations, for the text based on each key phrase among the set of key phrases associated with each of the predefined class labels, and the connector sentence as can be seen in Table 2.

At step 206 of the method 200, the one or more hardware processors 104 are configured by the instructions to derive via the LM ( model *M*) executed by the one or more hardware processors 104, perplexity based key phrase level features and log-likelihood based key phrase level features for each of the plurality of label-specific augmentations. Each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase as in equation 5. Each of the log-likelihood based key phrase level features captures an increase in log-likelihood of the key phrase from the set of key phrases, wherein the increase in log-likelihood is a difference between conditional log-likelihood of the key phrase given the text to be classified, and log-likelihood of the key phrase as in equation 6.

Further, at step 208 of the method 200, the one or more hardware processors 104 are configured by the instructions to determine, i) a class level perplexity based feature for each of the predefined class labels as a minimum of the perplexity based key phrase level features associated with the corresponding class label as in equation 7, and ii) a class level log-likelihood based feature for each of the predefined class labels as maximum of log-likelihood based key phrase level features associated with the corresponding class label as in equation 8.

At step 210 of the method 200, the one or more hardware processors 104 are configured by the instructions to predict the one or more class labels for the text based on one of : i) value of class level perplexity based features lying below a minimum threshold value; and ii) value of class level log-likelihood based features lying above a maximum threshold value. Thus, step 210 enables predicting class labels based on zero shot (ZS-PPL/LL) classification. Theses PPL and LL feature values computed for any text $X$ are themselves enough to predict the class label in zero-shot manner. If objective is to determine only single class label then here, the predicted class label is the one whose key phrase led to the minimum perplexity ratio or the maximum log-likelihood increase.

Further, if labelled training instances are available, then at step 212 of the method, a pretrained supervised machine learning classifiers trained on available labelled instances is used to enhance accuracy of prediction of text classification by using second step as explained in FIG. 1B. Thus, the text is classified into one or more class labels using the pretrained supervised machine learning classifier that utilizes the perplexity based key phrase level features, log-likelihood based key phrase level features, the class level perplexity based features, and the class level log-likelihood based features. The supervised machine learning classifier is trained on the perplexity based key phrase level features, log-likelihood based key phrase level features, the class level perplexity based features, and the class level log-likelihood based features obtained for a training data.

Irrespective of whether single step (ZS) or two step ML classifier based approach is used, for each predicted class label of the text, an explanation is generated in the form of a ranked list of key phrases sorted using values of the perplexity based key phrase level features or the log-likelihood based key phrase level features.

**Experiments:**

**Datasets:** Five publicly available datasets with different properties are used. Broadly, the text classification task is of two types - (i) topical where the class labels roughly correspond to the topics being discussed in the text and (ii) non-topical where the class labels generally correspond to some semantic property of the text as a whole. Herein during experimentation, popular topical datasets - AGNews (Zhang et al., 2015) (4 classes) and DBPedia (Lehmann et al.,2015) (14 classes) are considered. Further, two popular non-topical datasets - SST-2 (Socher et al., 2013) which is a binary sentiment analysis dataset and TREC (Voorhees and Tice, 2000) where one of the 6 answer types are to be predicted for various questions are considered. In addition to these single-label datasets, also considered is a multi-label dataset Ethos (Mollas et. al., 2020) where the goal is to predict one or more hate types for a hate speech comment.

Table 4 below shows the set of key phrases used for each class in these datasets. The connector sentences used for the different datasets are as follows: SST2-This comment finds the movie to be, TREC-The answer will be, AGNews-This news is about, DBPedia-This text is about, and Ethos-This comment is about.

**Table 4**

| (Key phrases used in all the datasets) | | |
|---|---|---|
| Dataset | Label | Key phrases |
| SST-2 | Positive | great, good, encouraging, brilliant, excellent, accurate, realistic, engaging, funny, exciting |
| | Negative | terrible, bad, unrealistic, frustrating, boring, forgettable, predictable, thoughtless, appalling, incomprehensible |
| AGNews | World | politics, terrorism, president of a country, a military related event, minister of a country, elections and government formation, a natural disaster, a war or an armed conflict, protests or demonstration, religious events |
| | Sports | sports, a sporting event, sporting awards, a sports champion, a sportsperson, wins or losses in sports, prize money |

(continued)

| Dataset | Label | Key phrases |
|---|---|---|
| | | (Key phrases used in all the datasets) |
| | Business | business, stock market, banking, monetary investments, economy, income and expenditure, corporate profit and loss, international trade, sale of goods and services, monetary policies |
| | Science | science, technology and engineering, research and development, internet and web, space exploration, cyber security, software, weather and climate, healthcare and pharma, flora and fauna |
| TREC | ABBR ENTY | an abbreviation, an expression which is abbreviated |
| | | an entity, an animal, an organ of body, a color, an invention, book and other creative piece, a currency name, a disease or a medicine, an event, food, a musical instrument, a language, a letter or a character, a plant, a product, a religion, a sport, a chemical element or a substance , a symbol or a sign, a technique or a method, an equivalent term, a vehicle, a word with a special property |
| | DESC | description of something, a definition of something, a manner of an action, a reason |
| | HUM | an individual, a group or organization of persons, a title of a person, description of a person |
| | LOC | a location, a country, a mountain, a city, a state |
| | NUM | a number, a postcode or other code, number of something, a date, distance or linear measure, price, order or rank, period or lasting time of something, percent or fraction, speed, temperature, size, area or volume, weight |
| DBPedia | Company | a company, an organization |
| | EducationalInstitution | an educational institution, a school, a college |
| | Artist | an artist, a painter, a singer, a musician, an actor, an entertainer, a scientist |
| | Athlete | an athelete, a sportsperson |
| | OfficeHolder | a designation held by someone, a |
| | MeanOfTransportation | politician, a lawmaker a vehicle, a |
| | Building | car, a train, an aeroplane, a ship or boat a building, a monument, a man-made structure |
| | NaturalPlace | a natural location, a natural reserve |
| | Village | a village, a town |
| | Animal | an animal species, an insect, a bird, a fish, a reptile |
| | Plant | a plant species |
| | Album | an album |
| | Film | a film, a movie |
| | Written Work | a book, a magazine, a novel |
| Ethos | violence | violence, physically |
| | directed_vs_generalized | hurting someone specific |
| | gender | individual as target |
| | race | gender, women |
| | national_origin | race, white people, black people |
| | | national origin, people from a specific country |
| | disability | disability, people with specific disorder or disability |
| | religion | religion, Islam, Christianity, Judaism, Hinduism |
| | sexual_orientation | sexual orientation, transgenders, homosexuality |

**Baselines:**

**ZS-KP:** As a variant of the vanilla zero-shot prompting approach, which guides the LM only based on the instruction for the task, a zero-shot with key phrases baseline is used. Along with the task instruction, the definition of the class label is included in terms of the key phrases which are used in the disclosed system 100 implementing the method 200. One sentence per class label is added to the prompt followed by the task instruction. E.g., to explain the AGNews' Sports class, the sentence '*The Sports TOPIC news is about* sports, a sporting event, sporting awards, a sports champion, a sportsperson, wins or losses in sports, or prize money.' to the prompt (a similar example for SST2 is shown in Table 1.

ZS-KP-CoT: This is a variant of the above ZS-KP baseline which also includes a Chain-of-Thought (CoT) instruction to press the LM to arrive at the answer, reasoning through a step-by-step process. The instruction *Let's think step-by-step* is appended. as proposed in (Kojima et al., 2022) to the prompt in ZS-KP and parse the output to arrive at the predicted class label. The predictions are evaluated for both ZS-KP and ZS-KP-CoT leniently, where the prediction is considered to be correct even if the exact class name is not present in the generated text, but a corresponding key phrase is.

FS-ICL: As part of the few shot in-context learning (Brown et al., 2020) baseline, a set of k (= 6) examples are randomly selected from the training data to build a prompt with the instruction and selected examples. Finally, the input test instance is appended to obtain the class label. In this FS-ICL baseline, the LMs considered were able to predict the exact class label and did not require any answer parsing as in the above zero-shot baselines.

CHT: A supervised baseline is also considered, where a classification head (CH) is tuned on top of the LM using the exact same labelled examples that are considered for training the ML classifier of the system 100 (at second step of classification). However, the layers of the LM are not allowed to get trained thereby keeping its inherent pre-training intact. This baseline gives the necessary comparison with the system 100 where labelled examples are used without fine-tuning the LM.

**Results and Analysis:** For all experiments, two moderate-sized autoregressive LMs - Generative pre-trained transformers (GPT-Neo-405 2.7B) (Black et al., 2021) and GPT2-XL (Radford et al., 2019) were considered. The focus of experiments was to compare multiple techniques of using the same model for text classification. For all datasets except Ethos, the accuracy is used as the evaluation metric, whereas for the multi-label Ethos dataset, micro-averaged F1-score across class labels is used. Table 5 shows the experimental results for the GPT-Neo-2.7B model. Here, the system 100 with - SVM and LR classifiers, outperforms all other baselines. Even the zero-shot technique ZS-PPL implemented by the system 100 outperforms the few-shot baseline for TREC, AGNews, DBPedia, and Ethos.

Table 6 below shows the experimental results for the GPT2-XL model. The reason for choosing this model for experiments was mainly to compare our results with Estienne (2023) which is the most relevant prior work as mentioned earlier. In the case of GPT2-XL model as well, system 100 outperforms all other baselines, including Estienne (2023). Again, the zero-shot techniques ZS-PPL and ZS-LL implemented by the system 100, outperform the few-shot baseline for AGNews, DBPedia and Ethos. ZS-PPL and ZS-LL also outperform the channel models of Min et al. (2022) in both zero-shot as well as few-shot settings. Experimentation was performed with another baseline CHT-BERT, a variant of CHT using an encoder-only model (bert-large-uncased). Though CHT-BERT outperforms CHT, the system 100 still proves to be better than this CHT-BERT baseline.

**Table 5**

| (Comparison of baselines and system 100 for the GPT-Neo-2.7B model) | | | | | |
|---|---|---|---|---|---|
| | SST-2 | TREC | AGNews | DBPedia | Ethos |
| Baselines: | | | | | |
| ZS-KP (zero-shot with key phrases) | 0.248 | 0.020 | 0.039 | 0.182 | 0.035 |
| ZS-KP-CoT (ZS-KP with Chain-of-Thought) | 0.061 | 0.046 | 0.024 | 0.239 | 0.019 |
| FS-ICL | 0.814 | 0.308 | 0.672 | 0.689 | 0.438 |
| CHT | 0.620 | 0.734 | 0.691 | 0.558 | 0.164 |
| **System 100:** | | | | | |
| ZS-PPL (zero-shot with only PPL features) | 0.752 | 0.384 | 0.787 | 0.735 | 0.527 |
| ZS-LL (zero-shot with only LL features) | 0.766 | 0.418 | 0.774 | 0.67 | 0.438 |
| SVM with all features and horizontal scaling | 0.893 | 0.804 | 0.860 | 0.912 | 0.671 |
| LR with all features and horizontal scaling | 0.893 | 0.798 | 0.858 | 0.926 | 0.673 |

**Table 6**

| | | | | | |
|---|---|---|---|---|---|
| Unsupervised Calibration through Prior Adaptation (Estienne, 2023) | | | | | |
| SUCPA (zero-shot) | 0.850 | 0.460 | 0.700 | 0.660 | NA |
| SUCPA (few-shot) | 0.890 | 0.550 | 0.780 | 0.880 | NA |
| Noisy Channel Language Model Prompting[†] (Min et al., 20 22) | | | | | |
| Channel (zero-shot) | 0.771 | 0.305 | 0.618 | 0.514 | NA |
| Channel (concat-based) | 0.850 | 0.420 | 0.685 | 0.585 | NA |
| Channel (ensemble-based) | 0.775 | 0.315 | 0.743 | 0.648 | NA |
| Other baselines: | | | | | |
| CHT-BERT* | 0.890 | 0.698 | 0.801 | 0.834 | 0.219 |
| **System 100** | | | | | |
| ZS-PPL (zero-shot with only PPL features) | 0.871 | 0.478 | 0.776 | 0.762 | 0.479 |
| ZS-LL (zero-shot with only LL features) | 0.875 | 0.462 | 0.764 | 0.716 | 0.421 |
| SVM with all features and horizontal scaling | 0.919 | 0.860 | 0.851 | 0.912 | 0.707 |
| LR with all features and horizontal scaling | 0.920 | 0.824 | 0.853 | 0.924 | 0.715 |

In table 6 Comparison of baselines and the system 100 for the GPT2-XL model. (†Tese numbers are using GPT2-Large model and the authors have observed similar performance for GPT2-XL making it comparable. *The baseline CHT-BERT is based on the encoder model bert-large-uncased.

**Ablation Analysis:** A detailed ablation analysis is carried out to quantify the contribution of each of the following - (i) horizontal scaling, (ii) perplexity-based (PPL) features, (iii) log-likelihood-based (LL) features, (iv) key phrase-level features, and (v) class-level features. Table 7 shows the ablation analysis results for the GPT2-XL model.

**Table 7**

| (Ablation analysis with the GPT2-XL model) | | | | | |
|---|---|---|---|---|---|
| | SST-2 | TREC | AGNews | DBPedia | Ethos |
| SVM default setting: With all features and horizontal scaling | 0.919 | 0.860 | 0.851 | 0.912 | 0.707 |
| SVM default setting without Horizontal scaling | 0.902 | 0.814 | 0.768 | 0.911 | 0.653 |
| SVM default setting without LL features | 0.916 | 0.648 | 0.825 | 0.888 | 0.639 |
| SVM default setting without PPL features | 0.916 | 0.840 | 0.855 | 0.909 | 0.710 |
| SVM default setting without class-level features | 0.921 | 0.858 | 0.845 | 0.907 | 0.707 |
| SVM default setting without keyphrase-level features | 0.869 | 0.576 | 0.781 | 0.896 | 0.673 |
| SVM default setting with only one keyphrase per class | 0.832 | 0.590 | 0.684 | 0.856 | 0.660 |
| LR default setting: With all features and horizontal scaling | 0.920 | 0.824 | 0.853 | 0.924 | 0.715 |
| LR default setting without Horizontal scaling | 0.908 | 0.820 | 0.792 | 0.911 | 0.686 |
| LR default setting without LL features | 0.914 | 0.684 | 0.828 | 0.884 | 0.633 |
| LR default setting without PPL features | 0.919 | 0.824 | 0.856 | 0.916 | 0.712 |
| LR default setting without class-level features | 0.918 | 0.822 | 0.850 | 0.917 | 0.703 |
| LR default setting without keyphrase-level features | 0.880 | 0.486 | 0.784 | 0.886 | 0.672 |
| LR default setting with only one keyphrase per class | 0.832 | 0.504 | 0.688 | 0.855 | 0.647 |

**Horizontal scaling:** This is clearly observed to be useful across all the datasets because the performance degrades without such scaling. Similarly, LL features and key phrase-level features are observed to be useful consistently across all the datasets. The class-level features are also similarly observed to be useful, though the decrease in accuracy is not prominent. On the other hand, mixed results are observed for the PPL features across multiple datasets for the GPT2-XL model.

**Effect of number of key phrases:** To measure the contribution of using multiple key phrases, two experiments were carried out. The first experiment evaluates the performance of the ML classifiers od the system 100 in the extreme case of using just one key phrase per class. The last rows for SVM and LR in Table 7 shows the accuracy numbers for all datasets in this case (used is the first key phrase for each class in Table 4). Even though there is a significant drop in accuracy as compared with the default setting, the accuracy is still better than the few-shot and CHT baselines for most of the datasets. The second experiment evaluates the effect of varying the number of key phrases used per class for the TREC dataset as shown in FIG.5. With just 4 key phrases per class, the accuracy close to 0.8 is observed.

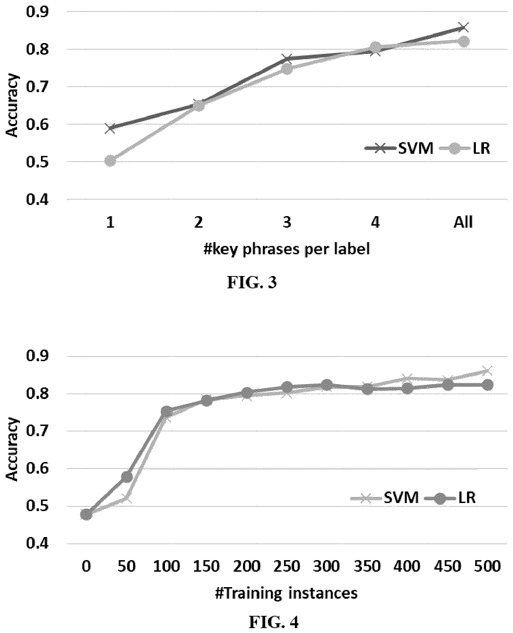

**Effect of number of training instances:** The effect of varying the number of training instances is evaluated for the TREC dataset as it had the largest difference between the zero-shot and supervised (SVM/LR) accuracy. FIG. 4 shows the accuracy when the number of training instances are increased from 50 to 500. There is a sharp increase to around 200 instances after which it gets plateaued.

**Effect of different connector sentences:** The effect of using multiple connector sentences is evaluated for TREC as shown in FIG. 5 where S is default connector. Though a small difference is observed in accuracy, even the worst case accuracy for SVM (0.786) is better than all other baselines for TREC using GPT2-XL.

**USE CASE: Analysis of Financial Audit Reports:** Financial audit is a complex process used by organizations to assure the stakeholders about the quality and trustworthiness of the governance (Whittington and Pany, 2021; Arens and Loebbecke, 1999). One important outcome of an audit is the audit report prepared by the auditors, wherein the auditor declares the Financial Statements of a company are free from material misstatement, are fair and accurate and are presented in accordance with the relevant accounting standards. A good comprehensive audit report is an important indicator of a good audit. Audit monitoring bodies such as 'The Chartered Accountants (CA) Society of India' have issued guidelines on the contents of audit reports, wherein they describe a set of audit aspects which the auditor should touch upon and describe. The problem of verifying whether an audit report has covered these audit aspects, can be modelled as a multi-class multi-label text classification problem where each sentence in the report can be labelled with zero or more audit aspects. A set of 15 audit aspects from standard auditing checklist (ICAI, 2017) and Companies (Auditor's Report) Order, 2020 (CARO) (ICAI, 2020), such as payables, inventory, and fixed assets is identified.

**Audit Dataset:** 3744 web-scraped audit reports made available by Maka et al. (2020) for the year 2014 are used. As getting gold-standard labelled examples was time and effort intensive, silver-standard training data (1097 sentences) were automatically obtained with the help of regular expression based patterns. These patterns were constructed using a set of key phrases obtained for each class by consulting domain experts. Same set of key phrases were used by system 100 for this classification problem.

**Test dataset:** For evaluating the classification performance, a set of 10 audit reports (1668 sentences) were labelled manually by domain experts.

**Results:** Table 8 shows the micro-averaged F 1-scores on the test dataset, using GPT2-XL. Output is also compared with a ChatGPT baseline using zero-shot prompting and observe a comparable performance.

**Table 8**

| (Performance on Audit Reports test dataset) | | | | | |
|---|---|---|---|---|---|
| **#training Instances** | **SVM** | **LR** | **ZS-PPL** | **ZS-LL** | **CG** |
| 1097 | 0.542 | 0.536 | 0.380 | 0.410 | 0.520 |
| 500 | 0.503 | 0.498 | | | |

The general challenges for handling the Audit report use case is summarized below: A multi-label classification problem with no labelled sentences available is a challenging task. With the help of the system 100 implementing the method 200, build a classification system could be built quickly which - (i) captures domain knowledge about audit aspects in terms of multiple corresponding key phrases, (ii) can be deployed in-house with limited resources to avoid sharing the data outside the organization, (iii) provides some explanations with each predicted label, and (iv) achieves reasonable performance (comparable with zero-shot ChatGPT) with a moderate-sized open-source LM.

Thus the method 200 implemented by the system 100 discloses a two-step classification using moderate-sized (#params $\leq$ 2.7B) autoregressive/ causal Language Models (LM). In the first step, for a text instance to be classified, a set of perplexity and log-likelihood based features are obtained from an LM. A light-weight classifier (SVM or LR) is trained in the second step to predict the final label. The system enables a new way of exploiting the available labelled instances, in addition to the existing ways like fine-tuning LMs or in-context learning. It neither needs any parameter updates in LMs like fine-tuning nor it is restricted by the number of training examples to be provided in the prompt like in-context learning. The key advantages of the disclosed system are explainability through most suitable key phrases and its applicability in resource poor environment

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for text classification, the method comprising:

   receiving (202), via one or more hardware processors, a text, predefined numbers of class labels, a set of key phrases associated with each of the predefined class labels, and a connector sentence, wherein the text is to be classified into one or more class labels from among predefined class labels;
   generating (204), via the one or more hardware processors, a plurality of label-specific augmentations for the text based on each key phrase among the set of key phrases associated with each of the predefined class labels, and the connector sentence;
   deriving (206), by a Language Model (LM) executed by the one or more hardware processors, perplexity based key phrase level features and log-likelihood based key phrase level features for each of the plurality of label-specific augmentations,

wherein each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase, and

wherein each of the log-likelihood based key phrase level features captures an increase in a log-likelihood of the key phrase from the set of key phrases, wherein the increase in the log-likelihood is a difference between a conditional log-likelihood of the key phrase given the text to be classified, and the log-likelihood of the key phrase;

determining (208), by the one or more hardware processors, i) a class level perplexity based feature for each of the predefined class labels as a minimum of perplexity based key phrase level features associated with the corresponding class label, and ii) a class level log-likelihood based feature for each of the predefined class labels as maximum of the log-likelihood based key phrase level features associated with the corresponding class label; and

predicting (210) for a zero shot classification, the one or more class labels for the text based on one of : i) value of class level perplexity based features lying below a minimum threshold value; and ii) value of class level log-likelihood based features lying above a maximum threshold value.

2. The processor implemented method as claimed in claim 1, further comprises:
enhancing an accuracy (212) of prediction of text classification of the text into one or more class labels using a pretrained supervised machine learning classifier that utilizes the perplexity based key phrase level features, log-likelihood based key phrase level features, the class level perplexity based feature per class label, and the class level log-likelihood based feature per class label, wherein the supervised machine learning classifier is trained on the perplexity based key phrase level features, log-likelihood based key phrase level features, the class level perplexity based feature per class label, and the class level log-likelihood based feature per class label obtained for a training data.

3. The processor implemented method as claimed in claim 1, wherein for each predicted class label of the text, an explanation is generated in the form of a ranked list of key phrases sorted using values of the perplexity based key phrase level features or the log-likelihood based key phrase level features.

4. A system (100) for text classification, the system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive a text, predefined numbers of class labels, a set of key phrases associated with each of the predefined class labels, and a connector sentence, wherein the text is to be classified into one or more class labels from among predefined class labels;
generate a plurality of label-specific augmentations for the text based on each key phrase among the set of key phrases associated with each of the predefined class labels, and the connector sentence;
derive by a Language Model (LM) executed by the one or more hardware processors, perplexity based key phrase level features and log-likelihood based key phrase level features for each of the plurality of label-specific augmentations,

wherein each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase, and
wherein each of the log-likelihood based key phrase level features captures an increase in a log-likelihood of the key phrase from the set of key phrases, wherein the increase in the log-likelihood is a difference between a conditional log-likelihood of the key phrase given the text to be classified, and the log-likelihood of the key phrase;

determine by the one or more hardware processors, i) a class level perplexity based feature for each of the predefined class labels as a minimum of the perplexity based key phrase level features associated with the corresponding class label, and ii) a class level log-likelihood based feature for each of the predefined class labels as maximum of the log-likelihood based key phrase level features associated with the corresponding class label; and

predict for a zero shot classification, the one or more class labels for the text based on one of : i) value of the class level perplexity based features lying below a minimum threshold value; and ii) value of the class level log-likelihood based features lying above a maximum threshold value.

5. The system as claimed in claim 4 further configured to:
enhance an accuracy of prediction of text classification of the text into one or more class labels using a pretrained supervised machine learning classifier that utilizes the perplexity based key phrase level features, log-likelihood based key phrase level features, the class level perplexity based feature per class label, and the class level log-likelihood based feature per class label, wherein the supervised machine learning classifier is trained on the perplexity based key phrase level features, log-likelihood based key phrase level features, the class level perplexity based feature per class label, and the class level log-likelihood based feature per class label obtained for a training data.

6. The system as claimed in claim 4, wherein for each predicted class label of the text, an explanation is generated in the form of a ranked list of key phrases sorted using values of the perplexity based key phrase level features or the log-likelihood based key phrase level features.

7. One or more non-transitory machine-readable information storage mediums comprising one or more instructions which when executed by one or more hardware processors cause:

receiving, a text, predefined numbers of class labels, a set of key phrases associated with each of the predefined class labels, and a connector sentence, wherein the text is to be classified into one or more class labels from among predefined class labels;
generating, a plurality of label-specific augmentations for the text based on each key phrase among the set of key phrases associated with each of the predefined class labels, and the connector sentence;
deriving, by a Language Model (LM), perplexity based key phrase level features and log-likelihood based key phrase level features for each of the plurality of label-specific augmentations,

wherein each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase, and
wherein each of the log-likelihood based key phrase level features captures an increase in a log-likelihood of the key phrase from the set of key phrases, wherein the increase in the log-likelihood is a difference between a conditional log-likelihood of the key phrase given the text to be classified, and the log-likelihood of the key phrase;

determining, i) a class level perplexity based feature for each of the predefined class labels as a minimum of perplexity based key phrase level features associated with the corresponding class label, and ii) a class level log-likelihood based feature for each of the predefined class labels as maximum of the log-likelihood based key phrase level features associated with the corresponding class label; and
predicting for a zero shot classification, the one or more class labels for the text based on one of : i) value of class level perplexity based features lying below a minimum threshold value; and ii) value of class level log-likelihood based features lying above a maximum threshold value.

8. The one or more non-transitory machine-readable information storage mediums as claimed in claim 7, further comprises:
enhancing an accuracy of prediction of text classification of the text into one or more class labels using a pretrained supervised machine learning classifier that utilizes the perplexity based key phrase level features, log-likelihood based key phrase level features, the class level perplexity based feature per class label, and the class level log-likelihood based feature per class label, wherein the supervised machine learning classifier is trained on the perplexity based key phrase level features, log-likelihood based key phrase level features, the class level perplexity based feature per class label, and the class level log-likelihood based feature per class label obtained for a training data.

9. The one or more non-transitory machine-readable information storage mediums as claimed in claim 7, wherein for each predicted class label of the text, an explanation is generated in the form of a ranked list of key phrases sorted using values of the perplexity based key phrase level features or the log-likelihood based key phrase level features.

EP 4 575 883 A1

**Text for classification**

System**100**

| Processor(s) **104** | I/O Interface(s) **106** |

Memory **102**

Database **108**

Modules **110**

**Causal Language Model (LM)**
**Machine Learning (ML) classifier**

**FIG. 1A**

19

100

**Text for classification**

**Connector sentence**

Generate prompts (label-specific augmentations for the text)

LM

Perplexity (PPL) based key phrase level features for each of the label-specific augmentations

class level perplexity-based feature for each of the predefined number of class labels

class label for the text based on one of : i) perplexity-based class level features lying below min threshold value; and ii) log-likelihood based class level features lying above a maximum threshold value

- Predefined class labels
- Key phrases per class label

Log-likelihood (LL) based key phrase level features for each of the label-specific augmentations

Class level log-likelihood-based feature for each of the predefined number of class labels

pretrained supervised ML classifier

**FIG. 1B**

**Predicted class labels for the text**

200

receiving a text, predefined numbers of class labels, a set of key phrases associated with each of the predefined class labels, and a connector sentence, wherein the text is to be classified into one or more class labels from among a predefined number of class labels
— 202

generating a plurality of label-specific augmentations for the text based on each key phrase among the set of key phrases associated with each of the predefined class labels, and the connector sentence
— 204

deriving, by a Language Model, perplexity based key phrase level features and log-likelihood based key phrase level features for each of the plurality of label-specific augmentations,
wherein each of the perplexity based key phrase level features captures a reduction in perplexity of a key phrase from the set of key phrases, wherein the reduction in perplexity is a ratio of conditional perplexity of the key phrase given the text to be classified, to the perplexity of the key phrase, and
wherein each of the log-likelihood based key phrase level features captures an increase in log-likelihood of the key phrase from the set of key phrases, wherein the increase in log-likelihood is a difference between conditional log-likelihood of the key phrase given the text to be classified, and log-likelihood of the key phrase
— 206

A

FIG. 2A

200

(A)

determining, by the one or more hardware processors, i) a class level perplexity-based feature for each of the predefined number of class labels as a minimum of perplexity based key phrase level features associated with the corresponding class label, and ii) a class level log-likelihood based feature for each of the predefined number of class labels as maximum of log-likelihood based key phrase level features associated with the corresponding class label

208

predicting for zero shot classification, the one or more class labels for the text based on one of : i) value of perplexity-based class level features lying below a minimum threshold value; and ii)value of log-likelihood based class level features lying above a maximum threshold value

210

enhancing an accuracy of prediction of text classification of the text into one or more class labels using a pretrained supervised machine learning classifier that utilizes the perplexity based key phrase level features, log-likelihood based key phrase level features, the class level perplexity based feature, and the class level log-likelihood based feature per class label wherein the supervised machine learning classifier is trained on the perplexity based key phrase level features, log-likelihood based key phrase level features, the class level perplexity based feature, and the class level log-likelihood based feature per class label obtained for a training data

212

**FIG. 2B**

FIG. 3

FIG. 4

FIG. 5

Europäisches
Patentamt

European
Patent Office

Office européen
des brevets

## EUROPEAN SEARCH REPORT

**Application Number**

EP 24 21 4888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHICK TIMO ET AL: "Exploiting Cloze-Questions for Few-Shot Text Classification and Natural Language Inference", PROCEEDINGS OF THE 16TH CONFERENCE OF THE EUROPEAN CHAPTER OF THE ASSOCIATION FOR COMPUTATIONAL LINGUISTICS: MAIN VOLUME, 23 April 2021 (2021-04-23), pages 255-269, XP093267892, DOI: 10.18653/v1/2021.eacl-main.20 Retrieved from the Internet: URL:https://aclanthology.org/2021.eacl-main.20.pdf> * Section 1,3 and 4 * ----- | 1-9 | INV. G06F40/284 G06F16/35 G06F40/289 G06F40/30 G06N20/00 |
| A | HU SHENGDING ET AL: "Knowledgeable Prompt-tuning: Incorporating Knowledge into Prompt Verbalizer for Text Classification", PROCEEDINGS OF THE 60TH ANNUAL MEETING OF THE ASSOCIATION FOR COMPUTATIONAL LINGUISTICS (VOLUME 1: LONG PAPERS), 27 May 2022 (2022-05-27), pages 2225-2240, XP093267895, DOI: 10.18653/v1/2022.acl-long.158 Retrieved from the Internet: URL:https://aclanthology.org/2022.acl-long.158.pdf> * section 1, 3 and 4 * ----- | 1-9 | TECHNICAL FIELDS SEARCHED (IPC) G06F G06N |

-/--

The present search report has been drawn up for all claims

| Place of search | Date of completion of the search | Examiner |
|---|---|---|
| Berlin | 8 April 2025 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 21 4888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Estienne Lautaro ET AL: "Unsupervised Calibration through Prior Adaptation for Text Classification using Large Language Models", arXiv.org, 1 August 2023 (2023-08-01), XP093267890, Retrieved from the Internet: URL:https://arxiv.org/pdf/2307.06713 * Section 1 to 5 * | 1-9 | |
| X,P | Pawar Sachin ET AL: "Why Generate When You Can Discriminate? A Novel Technique for Text Classification using Language Models", EACL 2024, 24 March 2024 (2024-03-24), XP093267885, Retrieved from the Internet: URL:https://aclanthology.org/2024.findings-eacl.74.pdf * the whole document * | 1-9 | |

TECHNICAL FIELDS
SEARCHED        (IPC)

The present search report has been drawn up for all claims

| Place of search | Date of completion of the search | Examiner |
|---|---|---|
| Berlin | 8 April 2025 | Alt, Susanne |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
............................................................................................
& : member of the same patent family, corresponding
     document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321086642